# EUROPEAN PATENT SPECIFICATION

(11) **EP 0 743 961 B1**
(45) Date of publication and mention of the grant of the patent: **29.07.1998**
(21) Application number: 95906925.3
(22) Date of filing: 09.01.1995
(51) Int. Cl.: C08G 18/79, C08L 97/02

(54) **PROCESS FOR THE PREPARATION OF LIGNOCELLULOSIC BODIES**
VERFAHREN ZUR HERSTELLUNG VON LIGNOCELLULOSEKÖRPERN
PROCEDE DE PREPARATION DE CORPS LIGNOCELLULOSIQUES

(30) Priority: 11.02.1994 GB 9402679
(43) Date of publication of application: 27.11.1996
(73) Proprietor: IMPERIAL CHEMICAL INDUSTRIES PLC, London SW1P 3JF (GB)
(72) Inventor: PHANOPOULOS, Christopher, B-3080 Tervuren (BE); VANDEN ECKER, Jacobus, Margareta, Valentijn, B-2490 Balen (BE)
(74) Representative: Swinnen, Anne-Marie
(86) International application number: EP9500093
(87) International publication number: WO9521878

(56) References cited:
- EP-A- 0 195 917
- EP-A- 0 530 638

## Description

This invention relates to a process for the preparation of lignocellulosic bodies and to polyisocyanate compositions for use in binding lignocellulosic material.

The use of liquid organic polyisocyanates as binders for lignocellulosic material such as wood in the manufacture of sheets or moulded bodies such as waferboard, chipboard, fibreboard and plywood is well known. In a typical process the liquid organic polyisocyanate, optionally in the form of a solution or an aqueous emulsion, is applied to the lignocellulosic material which is then subjected to heat and pressure.

There are some disadvantages related to the use of liquid polyisocyanates. Due to the facts that wood always contains water and that the polyisocyanates will react with water, the use of liquid polyisocyanates does not allow the preparation of storage stable polyisocyanate-wood blends which can be processed into compressed boards even after days of interim storage.

Therefore it has been proposed in the prior art (see EP-A-0530638) to use solid polyisocyanates as binders for lignocellulosic material. Examples of solid polyisocyanates described in the prior art include dimeric 4,4'-diisocyanatodiphenylmethane and solid reaction products of polyphenyl polymethylene polyisocyanates and 2-methyl-1,3-propanediol.

However board properties such as internal bond strength and swelling of boards obtained by using these solid polyisocyanate binders are not satisfactory.

It is an object of the present invention to provide a solid polyisocyanate composition for use in binding lignocellulosic material yielding boards with improved board properties.

Accordingly, the present invention provides a process for binding lignocellulosic material comprising the steps of
a) bringing said lignocellulosic material in contact with a solid organic polyisocyanate composition and
b) subsequently allowing said material to bind,
characterised in that the solid organic polyisocyanate composition comprises dimerised polyphenyl polymethylene polyisocyanate.

Polyphenyl polymethylene polyisocyanates are well-known in the art and are commonly referred to as polymeric MDI (methylene diphenyl diiisocyanate). They are prepared by phosgenation of corresponding mixtures of polyamines obtained by condensation of aniline and formaldehyde. They contain diisocyanates, triisocyanates and higher functionality polyisocyanates together with any phosgenation by-products.
Polymeric MDI generally has a number average functionality of between 2.1 and 2.9, a number average molecular weight of between 300 and 450, a difunctional MDI (2,2'-, 2,4'- and 4,4'-isomers) content of between 30 and 50 % and an isocyanate value of between 29 and 32 %.
Emulsifiable (in water or organic media) forms of polymeric MDI can also be used in the present invention.

Dimerised polymeric MDI is obtained by adding to polymeric MDI a dimerisation catalyst in an amount ranging from 0.01 to 5 %, preferably from 0.1 to 1 %, most preferably from 0.2 to 0.7 % by weight based on the amount of polymeric MDI. The polymeric MDI may be used as such or it may be dissolved in an organic solvent (such as hexane, toluene, cyclohexane, 2,3-dibenzyltoluene, dimethylformamide, methylene chloride or acetone) or it may be emulsified in water using an appropriate emulsifying agent. The temperature is kept below 70°C, although slightly higher temperatures can also be used (up to 100°C). Conveniently the reaction is carried out at a temperature as low as possible. The reaction period varies between 30 seconds and 5 hours depending on the catalyst level used and the temperature. Dimer crystals precipitate which may be filtered and washed.

Dimerisation catalysts are known as such and include trialkyl phosphines, dialkylarylphosphines, imidazoles, morpholines, S-containing heterocyclic compounds, hexamethylphosphonic triamide, 2-mercaptoquinoline, pyridines and tertiary amines at higher concentrations. A list of further suitable dimerisation catalysts can be found in "Polyurethanes: Chemistry and Technology", by J.H. Saunders and K.C. Frisch, Interscience Publ. New York, 1962, pages 91 to 94. Most preferred catalysts are phosphines like tri-n-octylphosphine and tri-n-dodecylphosphine.

Dimerised polymeric MDI is a white to pale green solid product. It dissociates at temperatures varying between 170 and 220°C.

If the reaction is carried out in a vessel a solid block of dimerised polymeric MDI is obtained which may be ground so as to obtain a powder. If the reaction mixture is coated on a plate, a film of dimerised polymeric MDI is obtained.
Both types of dimerised polymeric MDI can be used in the process of the present invention, as can aqueous or organic dispersions of dimerised polymeric MDI.

The obtained dimerised polymeric MDI may be posttreated, for example, by blocking the free isocyanate groups of the dimer with conventional blocking agents.

By using dimerised polymeric MDI as binder instead of dimerised 4,4'-MDI or adducts of polymeric MDI and 2-methyl-1,3-propanediol, boards are obtained with improved internal bond strength and improved swelling properties.

The solid polyisocyanate composition for use in the process of the present invention further may comprise conventional additives like release agents, flame retardants, lignocellulosic preserving agents, fungicides, waxes, sizing agents, fillers, extenders, dyes, coupling agents and other binders like formaldehyde condensate adhesive resins.

The lignocellulosic bodies are prepared by bringing the lignocellulosic parts into contact with the solid polyisocyanate composition like by means of mixing, spraying, spreading, dry blending or in case of films by laying or laminating the solid polyisocyanate composition with/onto the lignocellulosic parts and by pressing the combination of the solid polyisocyanate composition and the lignocellulosic parts, preferably by hot-pressing, normally at 150°C to 220°C and 0.25 to 6 MPa specific pressure. Such binding processes are commonly known in the art.

The lignocellulosic material after treatment with the solid polyisocyanate composition is placed on caul plates made of aluminium, nickel, steel or any other conventional metal, which serve to carry the furnish into the press where it is compressed to the desired extent, usually at a temperature between 150°C and 220°C. At the start of a manufacturing run it may be helpful to condition the press plates by spraying their surfaces with an external release agent. Alternatively, internal mould release agents may be incorporated into the binder composition or blended with the binder/lignocellulosic mixture.

The process of the present invention may be used in the manufacture of waferboard, medium density fiberboard, particle board (also known as chipboard), plywood, laminated veneer lumber, strand boards and for veneering operations.

Thus the lignocellulosic material used can include wood strands, woodchips, wood fibers, shavings, veneers, wood wool, wood flour, cork, bark, sawdust and like waste products of the wood working industry as well as other materials having a lignocellulosic or cellulosic basis such as paper, bagasse, straw, flax, sisal, hemp, rushes, reeds, rice hulls, husks, grass, nutshells and the like. Additionally, there may be mixed with the lignocellulosic materials other particulate or fibrous materials such as mineral fillers, glass fiber, mica, rubber, textile waste such as plastic fibers and fabrics.

When the polyisocyanate composition is applied to the lignocellulosic material, the weight ratio of polyisocyanate/lignocellulosic material will vary depending on the bulk density of the lignocellulosic material employed. Therefore, the polyisocyanate compositions may be applied in such amounts to give a weight ratio of polyisocyanate/lignocellulosic material in the range of 0.1:99.9 to 20:80 and preferably in the range of 0.5:99.5 to 10.0:90.0.

If desired, other conventional binding agents, such as formaldehyde condensate adhesive resins, may be used in conjunction with the solid polyisocyanate composition.

More detailed descriptions of methods of manufacturing lignocellulosic boards and similar products based on lignocellulosic material are available in the prior art. The techniques and equipment conventionally used can be adapted for use with the polyisocyanate compositions of the present invention.

The sheets and moulded bodies produced from the polyisocyanate compositions of the present invention have excellent mechanical properties and they may be used in any of the situations where such articles are customarily used.

The invention is illustrated but not limited by the following examples.

### Example 1

Dimerised polymeric MDI was prepared by mixing 0.25 g of tri-n-octylphosphine catalyst with 100 g of polymeric MDI Suprasec X2185 (available from Imperial Chemical Industries) at room temperature for 3 minutes. Thereafter the reaction mixture was casted onto a flat surface and the resulting product was hammer-milled into a powder.
The obtained dimerised polymeric MDI was dry blended with wood chips supplied by Solvabois S.A. (Belgium) of which the fines were screened out. 3 % loading of solid binder was used and blending was conducted over a 15 minutes period.
Boards of 18 x 18 x 0.6 cm at a density of 0.7 g/cm were produced by subjecting sufficient wood mat to 5 MPa specific pressure at 200°C for 20 sec/mm. The press platens were pretreated with an Isostrip 23 release coating (available from Imperial Chemical Industries).
After pressing, the boards were removed and allowed to equilibrate to ambient conditions for 24 hours. They were then trimmed and samples cut from each board (referred to below as sample A).
Internal bond strength (IB expressed in kPa) was measured according to DIN 52365 and thickness swell (expressed in %) according to DIN 68763.
Results are given in Table 1 below (at least 3 samples were tested; results reported are the average of the measured values).

For comparative purposes the experiment was repeated using instead of dimerised polymeric MDI as binder:
- dimerised 4,4'-MDI (prepared along the lines described above (but at 50°C) using Suprasec MPR available from Imperial Chemical Industries); referred to below as sample B;
- the solid reaction product of polymeric MDI (Suprasec X 2185 available from Imperial Chemical Industries) and 2-methyl-1,3-propanediol (prepared along the lines described in EP-A-0530638); referred to below as sample C.

**Table 1**

| | IB (kPa) | Swell after 2h (%) | Swell after 24 h (%) |
|---|---|---|---|
| Sample A | 385 | 38.5 | 57.8 |
| Sample B | 202 | > 100 * | > 100 * |
| Sample C | 249 | > 100 * | > 100 * |

| | | | |
|---|---|---|---|
| (*) These samples fall apart | | | |

The results indicate that internal bond strength and swelling properties of boards produced using dimerised polymeric MDI are improved compared to boards produced using dimerised 4,4'-MDI or solid adducts of polymeric MDI and 2-methyl-1,3-propanediol of the prior art.

### Example 2

Dimerised polymeric MDI was prepared by mixing 0.25 g of tri-n-octylphosphine catalyst with 100 g of polymeric MDI Suprasec X2185 (available from Imperial Chemical Industries) at room temperature for 3 minutes. Thereafter the reaction mixture was casted onto a flat surface and the resulting product was hammer-milled into a powder.
A 3% loading of the obtained dimerised polymeric MDI was laid on Southern Yellow Pine veneer.
Three layered veneer boards of 18 x 18 x 6.5 cm at a density of 0.7 g/cm were produced by subjecting sufficient wood mat to 5 MPa specific pressure at 200°C for 20 sec/mm. The press platens were pretreated with an Isostrip 23 release coating (available from Imperial Chemical Industries).
After pressing, the boards were removed and allowed to equilibrate to ambient conditions for 24 hours. They were then trimmed and samples cut from each board (referred to below as sample D).
Internal bond strength (IB expressed in MPa) was measured according to DIN 52365 and thickness swell (expressed in %) according to DIN 68763.

Dimerised polymeric MDI was prepared along the lines described above but in film form by making a film of the unreacted mixture on release paper (Unical 'N' Decalcomania available from Brittains T.R. Ltd.) using a RK Print-Coat instrument and allowing it to cure.
Three layered veneer boards (sample E) were prepared as described above using a 3% loading of this dimerised polymeric MDI film as binder and internal bond strength and thickness swell was measured.

Results are given in Table 2 below.

**Table 2**

| | IB (MPa) | Swell after 24 h (%) |
|---|---|---|
| Sample D | 745 | 13.9 |
| Sample E | 588 | 12.2 |

## Claims

1. Process for binding lignocellulosic material comprising the steps of
a) bringing said lignocellulosic material in contact with a solid organic polyisocyanate composition and
b) subsequently allowing said material to bind,
characterised in that the solid organic polyisocyanate composition comprises dimerised polyphenyl polymethylene polyisocyanate.

2. Process according to claim 1 wherein said dimerised polyphenyl polymethylene polyisocyanate is obtained by adding to polyphenyl polymethylene polyisocyanate a dimerisation catalyst in an amount ranging from 0.01 to 5 % by weight based on the amount of polyphenyl polymethylene polyisocyanate at a temperature below 70°C.

3. Process according to claim 2 wherein said dimerisation catalyst is a trialkylphosphine.

4. Process according to any one of the preceding claims wherein the dimerised polyphenyl polymethylene polyisocyanate is used in the form of a powder or a film.

5. Process according to any one of the preceding claims wherein step b) involves pressing the combination of the solid polyisocyanate composition and the lignocellulosic material at elevated temperatures.

6. Process according to any one of the preceding claims wherein the weight ratio of polyisocyanate/lignocellulosic material ranges from 0.1:99.9 to 20:80.

7. Solid organic polyisocyanate composition comprising dimerised polyphenyl polymethylene polyisocyanate.

8. Method for preparing a composition as defined in claim 7 comprising the step of adding to polyphenyl polymethylene polyisocyanate a dimerisation catalyst in an amount ranging from 0.01 to 5 % by weight based on the amount of polyphenyl polymethylene polyisocyanate at a temperature below 70°C.

9. Method according to claim 8 wherein said dimerisation catalyst is a trialkylphosphine.

## Patentansprüche

1. Verfahren zum Binden von Lignocellulosematerial, umfassend die Schritte:
a) in Kontakt bringen des Lignocellulosematerials mit einer festen organischen Polyisocyanat-Zusammensetzung, und
b) nachfolgendes Binden des Materials,
**dadurch gekennzeichnet, daß**
die feste organische Polyisocyanat-Zusammensetzung dimerisiertes Polyphenylpolymethylenpolyisocyanat umfaßt.

2. Verfahren nach Anspruch 1, wobei das dimerisierte Polyphenylpolymethylenpolyisocyanat erhalten wird, indem zu Polyphenylpolymethylenpolyisocyanat ein Dimerisierungskatalysator in einer Menge im Bereich von 0,01 bis 5 Gew.-%, bezogen auf die Menge an Polyphenylpolymethylenpolyisocyanat, bei einer Temperatur unterhalb von 70°C gegeben wird.

3. Verfahren nach Anspruch 2, wobei der Dimerisierungskatalysator ein Trialkylphosphin ist.

4. Verfahren nach einem der vorhergehenden Ansprüche, wobei das dimerisierte Polyphenylpolymethylenpolyisocyanat in Form eines Pulvers oder eines Films verwendet wird.

5. Verfahren nach einem der vorhergehenden Ansprüche, wobei Schritt (b) das Pressen der Verbindung aus der festen Polyisocyanat-Zusammensetzung und dem Lignocellulosematerial bei erhöhten Temperaturen beinhaltet.

6. Verfahren nach einem der vorhergehenden Ansprüche, wobei das Gewichtsverhältnis von Polyisocyanat zu Lignocellulosematerial im Bereich von 0,1:99,9 bis 20:80 liegt.

7. Feste organische Polyisocyanat-Zusammensetzung, umfassend dimerisiertes Polyphenylpolymethylenpolyisocyanat.

8. Verfahren zur Herstellung einer Zusammensetzung gemäß Anspruch 7, umfassend den Schritt der Zugabe eines Dimerisierungskatalysators in einer Menge im Bereich von 0,01 bis 5 Gew.-%, bezogen auf die Menge an Polyphenylpolymethylenpolyisocyanat, zu Polyphenylpolymethylenpolyisocyanat bei einer Temperatur unterhalb von 70°C.

9. Verfahren nach Anspruch 8, wobei der Dimerisierungskatalysator ein Trialkylphosphin ist.

## Revendications

1. Procédé pour la liaison d'une matière lignocellulosique, comprenant les étapes consistant
a) à mettre ladite matière lignocellulosique en contact avec une composition de polyisocyanate organique solide, et
b) à laisser ensuite la liaison de la matière se faire,
caractérisé en ce que la composition de polyisocyanate organique solide comprend un polyphénylpolyméthylènepolyisocyanate dimérisé.

2. Procédé suivant la revendication 1, dans lequel le polyphénylpolyméthylènepolyisocyanate dimérisé est obtenu en ajoutant à du polyphénylpolyméthylènepolyisocyanate un catalyseur de dimérisation en une quantité de 0,01 à 5 % en poids sur la base de la quantité de polyphénylpolyméthylènepolyisocyanate à une température inférieure à 70°C.

3. Procédé suivant la revendication 2, dans lequel le catalyseur de dimérisation est une trialkylphosphine.

4. Procédé suivant l'une quelconque des revendications précédentes, dans lequel le polyphénylpolyméthylènepolyisocyanate dimérisé est utilisé sous forme d'une poudre ou d'un film.

5. Procédé suivant l'une quelconque des revendications précédentes, dans lequel l'étape b) comprend le passage à la presse de l'association de la composition de polyisocyanate solide et de la matière lignocellulosique à des températures élevées.

6. Procédé suivant l'une quelconque des revendications précédentes, dans lequel le rapport pondéral polyisocyanate/matière lignocellulosique est compris dans l'intervalle de 0,1:99,9 à 20:80.

7. Composition de polyisocyanate organique solide comprenant un polyphénylpolyméthylènepolyisocyanate dimérisé.

8. Procédé pour la préparation d'une composition répondant à la définition suivant la revendication 7, comprenant l'étape consistant à ajouter à un polyphénylpolyméthylènepolyisocyanate un catalyseur de dimérisation en une quantité de 0,01 à 5 % en poids sur la base de la quantité de polyphénylpolyméthylènepolyisocyanate à une température inférieure à 70°C.

9. Procédé suivant la revendication 8, dans lequel le catalyseur de dimérisation est une trialkylphosphine.
